# EUROPEAN PATENT APPLICATION

(11) **EP 4 773 362 A1**
(43) Date of publication of application: **08.07.2026**
(21) Application number: 25869620.2
(22) Date of filing: 29.09.2025
(51) Int. Cl.: H01M 50/152, H01M 50/342, H01M 50/107

(54) **COVER PLATE AND BATTERY**

(30) Priority: 30.09.2024 CN 202422412896 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: CHEN, Pandong, Huizhou, Guangdong 516039 (CN); LI, Renbing, Huizhou, Guangdong 516039 (CN); YAN, Bo, Huizhou, Guangdong 516039 (CN); XU, Yuebin, Huizhou, Guangdong 516039 (CN)
(74) Representative: Berggren Oy
(86) International application number: PCT/CN2025/125508
(87) International publication number: WO 2026/067803

(57) **Abstract**

The present application provides a cover plate and a battery, where the cover plate is applied to batteries. The cover plate includes a plurality of ribs, each rib extends outward from the center of the cover plate along a radial direction of the cover plate, and the plurality of ribs are distributed along a circumferential direction of the cover plate. The cover plate is further provided with a plurality of score grooves, each score groove is provided between two adjacent ribs, and the score grooves are configured to rupture when the internal pressure of the battery exceeds a preset value.

## Description

This application claims priority to and the benefit of Chinese Patent Application No. 202422412896.6, filed with the China National Intellectual Property Administration on Sep. 30, 2024, the disclosure of which is incorporated herein by reference in its entirety.

### TECHNICAL FIELD

The present application relates to the field of battery technologies, and in particular, to a cover plate and a battery.

### BACKGROUND

Batteries are generally equipped with a cover plate as a seal. In the related art, the cover plate is typically flat or reinforced with ribs on a flat structure. To address the situation where the internal pressure of the battery continues to increase during use, some battery cover plates are also equipped with a valve-opening structure. This structure can tear the cover plate when the internal pressure exceeds the pressure-bearing capacity of the cover plate, allowing the interior of the battery to communicate with the external environment.

### SUMMARY

In the related art, the valve-opening structure of the battery cover plate is equipped with reinforcing ribs, which significantly reduces the strength of the cover plate.

The present application provides a cover plate for a battery, including:
a plurality of ribs provided on the cover plate, where the plurality of ribs each extend outward from a center of the cover plate along a radial direction of the cover plate, and the plurality of ribs are distributed along a circumferential direction of the cover plate; and
a plurality of score grooves provided on the cover plate, where each of the plurality of score grooves is provided between two adjacent ones of the plurality of ribs, and the plurality of score grooves are configured to rupture under an internal pressure of the battery.

The present application further provides a battery, including:
a housing provided with a receiving chamber;
a jelly roll disposed in the receiving chamber; and
the cover plate provided in possible embodiments of the present application, where the cover plate covers the housing to seal the receiving chamber.

### BENEFICIAL EFFECTS

The cover plate provided in the present application features a plurality of ribs extending along the radial direction and distributed in the circumferential direction of the cover plate. This design effectively enhances the structural strength of the cover plate in both the radial direction and the circumferential direction. By providing the score grooves in the regions of the cover plate between adjacent ribs, and distributing the score grooves in the circumferential direction, the thickness of the cover plate at the score grooves is less than that of other parts of the cover plate. This design allows the cover plate to tear along the score grooves when the internal pressure of the battery exceeds the allowable strength of the cover plate, without compromising the strength of the ribs, thereby facilitating stable release of the internal pressure.

The battery provided in the present application uses the aforementioned cover plate. When assembling the cover plate onto the housing, the side of the cover plate with the score grooves faces the jelly roll and covers the housing to seal the receiving chamber. This design allows at least part of the internal pressure of the battery to concentrate within the score grooves. As the internal pressure of the battery increases, it can cause the cover plate to crack along the score groove, thereby providing pressure relief protection.

### BRIEF DESCRIPTION OF THE DRAWINGS

FIG. 1 is a schematic structural view of one side of a cover plate according to some possible embodiments of the present application.
FIG. 2 is a schematic structural view of another side of the cover plate according to some possible embodiments of the present application.
FIG. 3 is a schematic structural view of an orthographic projection of one side of the cover plate according to some possible embodiments of the present application.
FIG. 4 is a schematic cross-sectional view of the cover plate taken along line A-A in FIG. 3.
FIG. 5 is an enlarged schematic view of portion B in FIG. 4.
FIG. 6 is a schematic structural view of the cover plate according to some possible embodiments of the present application.
FIG. 7 is a schematic structural view of a battery according to some possible embodiments of the present application.
FIG. 8 is a block diagram of the battery according to some possible embodiments of the present application.

Description of reference numerals:
100, battery; 10, cover plate; x, center of the cover plate; y, radial direction of the cover plate; z, circumferential direction of the cover plate; 11, rib; 111, side wall; 112, end wall; 113, top wall; 12, score groove; 120, groove wall; 121, first score groove; 122, second score groove; 123, third score groove; 124, fourth score groove; 125, fifth score groove; 13, cover body; 14, annular protrusion; 20, housing; 21, receiving chamber; 30, jelly roll.

### DETAILED DESCRIPTION

In the description of the present application, unless otherwise explicitly specified and defined, the terms "joined," "connected," and "fixed" should be understood in a broad sense. For example, they can refer to a fixed connection or a detachable connection, or be integral; they can be a mechanical connection or an electrical connection; they can be directly connected or indirectly connected through an intermediary medium, and can refer to the communication within two components or the interaction relationship between two components. For those skilled in the art, the specific meanings of these terms in the present application can be understood based on the specific context.

In the present application, unless otherwise explicitly specified and defined, the terms "on" or "below" regarding the first feature relative to the second feature may include situations where the first and second features are in direct contact, as well as situations where the first and second features are not in direct contact but are connected through additional features between them. Furthermore, the terms "on," "above," and "on top of" the second feature include both directly above and diagonally above the second feature, with the first feature being at a higher horizontal level than the second feature. Similarly, the terms "below," "under," and "beneath" the second feature include both directly below and diagonally below the second feature, with the first feature being at a lower horizontal level than the second feature.

In the description of the embodiments, the terms "upper," "lower," "left," "right," "front," "back," and similar directional or positional relationships are based on the orientations or positional relationships shown in the drawings. These are provided for convenience of description and simplification of operation, and are not intended to indicate or imply that the referenced devices or elements must have a specific orientation, or be constructed and operated in a specific orientation. Therefore, they should not be construed as limitations of the present application. Additionally, the terms "first" and "second" are used for descriptive distinction and do not carry any special meaning.

Batteries are generally equipped with a cover plate as a seal. In the related art, the cover plate is typically flat or reinforced with ribs on a flat structure. To address the situation where the internal pressure of the battery continues to increase during use, some battery cover plates are also equipped with a valve-opening structure. This structure can tear the cover plate when the internal pressure exceeds the pressure-bearing capacity of the cover plate, allowing the interior of the battery to communicate with the external environment. In the related art, the valve-opening structure of the battery cover plate is equipped with reinforcing ribs, which significantly reduces the strength of the cover plate.

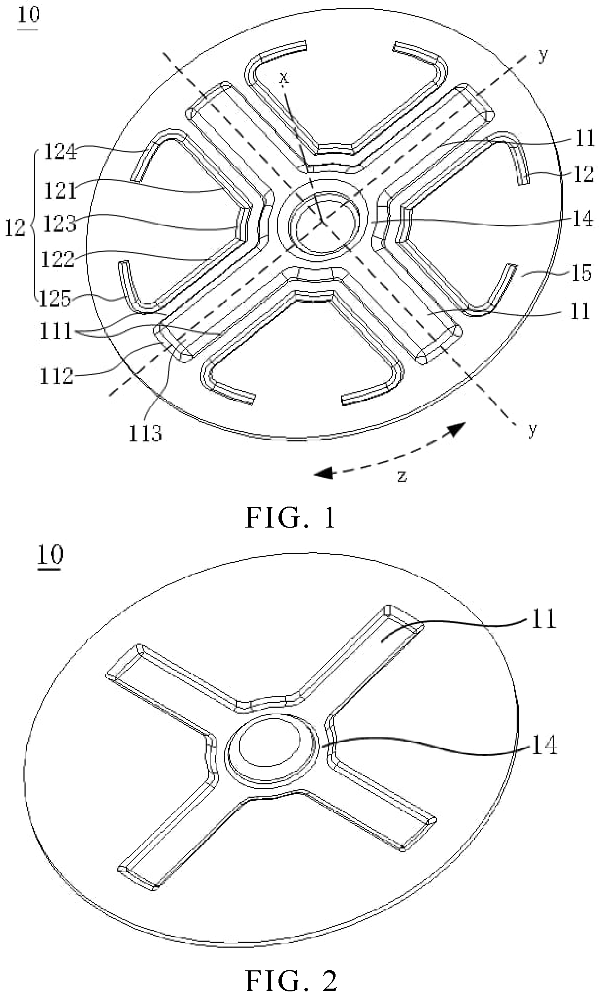

Please refer to FIG. 1 and FIG. 2, where FIG. 1 is a schematic structural view of one side of a cover plate according to some embodiments of the present application, and FIG. 2 is a schematic structural view of another side of the cover plate according to some embodiments of the present application.

Some embodiments of the present application provide a cover plate 10, which can be applied to batteries. The cover plate 10 includes a plurality of ribs 11, each of the plurality of ribs extends radially outward from a center X of the cover plate 10 along a radial direction Y of the cover plate 10, and the plurality of ribs 11 are distributed along a circumferential direction Z of the cover plate 10. The cover plate 10 is further provided with a plurality of score grooves 12, each of the plurality of score grooves 12 is provided between two adjacent ribs 11, and the score grooves 12 are configured to rupture under the internal pressure of the battery. An advantageous aspect of the cover plate 10 provided in the embodiments of the present application is the arrangement of the plurality of ribs 11 extending along the radial direction y and distributed in the circumferential direction z. This design effectively enhances the structural strength of the cover plate 10 in both the radial direction y and the circumferential direction z. By providing the score grooves 12 in the regions of the cover plate 10 between adjacent ribs 11, and distributing the score grooves 12 in the circumferential direction z, the thickness of the cover plate 10 at the score grooves 12 is less than that of other parts of the cover plate 10. This design allows the cover plate 10 to tear along the score grooves 12 when the internal pressure of the battery 100 exceeds the allowable strength of the cover plate 10, without compromising the strength of the ribs 11, thereby facilitating stable release of the internal pressure of the battery.

Please refer to FIG. 1. The cover plate 10 may include a cover body 13, and the ribs 11 are connected to the cover body 13. At least one rib 11 may include two side walls 111 that are oppositely arranged. It should be noted that the presence of two oppositely arranged side walls 111 in at least one rib 11 can be understood in several ways: it could mean that only one of the plurality of ribs 11 is equipped with two oppositely arranged side walls 111, or it could mean that several of the ribs 11 each include two oppositely arranged side walls 111, or it could mean that all of the ribs 11 are each equipped with two oppositely arranged side walls 111.

In some embodiments of the present application, at least one side wall 111 may be inclined relative to the cover body 13, so that the distance between the two side walls 111 gradually decreases in the direction away from the cover body 13. For example, one side wall 111 of the rib 11 may be inclined relative to the cover body 13, or both side walls 111 of the rib 11 may be inclined relative to the cover body 13. Compared to the design in the related art where both side walls 111 are perpendicular to the cover body 13, this design results in the ribs 11 with better structural strength. Please continue to refer to FIG. 1. The rib 11 may further include an end wall 112 and a top wall 113. The end wall 112 is connected to the ends of the two side walls 111 that are farther from the center x of the cover plate 10, and the top wall 113 is connected to the edges of the two side walls 111 that are farther from the cover body 13. In some embodiments of the present application, the end wall 112 may be connected to the two side walls 111 in a curved manner to enhance the strength of the rib 11.

In some embodiments, the top wall 113 may be connected to the two side walls 111 in a curved manner to enhance the strength of the rib 11.

For example, the end wall 112 may be connected to the two side walls 111 in a curved manner to enhance the strength of the rib 11; alternatively, the top wall 113 may be connected to the two side walls 111 in a curved manner to enhance the strength of the rib 11; alternatively, both the end wall 112 and the top wall 113 may be connected to the two side walls 111 in a curved manner to enhance the strength of the rib 11.

It can be understood that in some other embodiments, the cover body 13 may be the cover plate 10 itself, and the rib 11 may be a part of the cover plate 10, meaning that the rib 11 and the cover plate 10 form an integrated structure. The rib 11 can be at least partially formed by stamping the cover plate 10.

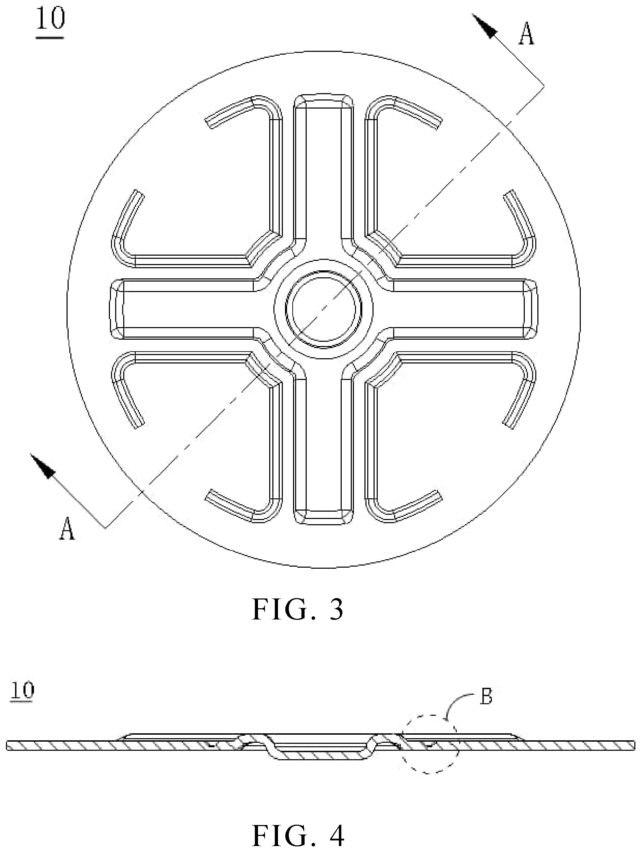

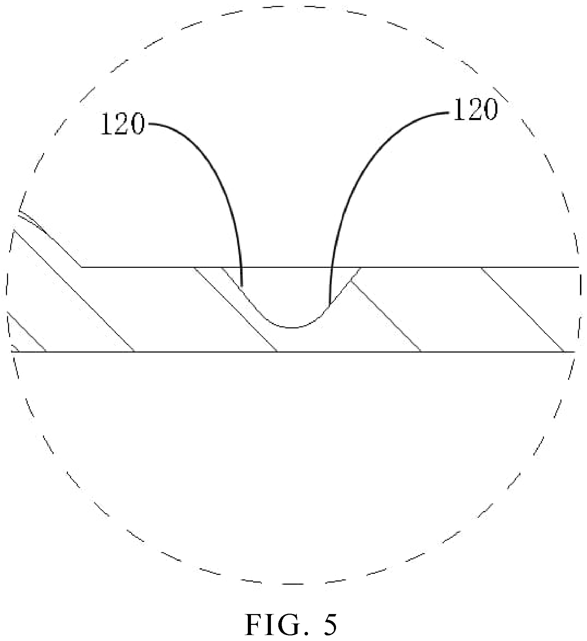

Please refer to FIG. 1, FIG. 3, FIG. 4, and FIG. 5. FIG. 3 is a schematic structural view of an orthographic projection of one side of the cover plate according to some embodiments of the present application. FIG. 4 is a schematic cross-sectional view of the cover plate taken along line A-A in FIG. 3. FIG. 5 is an enlarged schematic view of portion B in FIG. 4.

The score groove 12 can be formed by stamping or a subtractive process. The score groove 12 may be configured as a V-shaped groove or a U-shaped groove. The "V-shaped groove" refers to a configuration where the cover plate 10 includes two groove walls 120 intersecting at an angle. In the direction from the opening of the V-shaped groove to the bottom of the V-shaped groove, the distance between the two groove walls 120 gradually narrows. Alternatively, the V-shaped groove can be formed by an enclosed concave surface, where the opening of the V-shaped groove gradually decreases in size from the opening to the bottom of the V-shaped groove. The "U-shaped groove" refers to a configuration where the cover plate 10 includes two oppositely arranged groove walls 120 and a groove bottom connecting the two groove walls 120. The groove bottom can be either a flat surface or a curved surface. In the direction from the opening of the U-shaped groove to the bottom of the U-shaped groove, the distance between the two groove walls 120 remains constant or changes very slightly.

Please continue to refer to FIG. 1. In some embodiments, at least one score groove 12 includes a first score groove 121 and a second score groove 122. Both the first score groove 121 and the second score groove 122 extend in the direction from the edge of the cover plate 10 to the center x of the cover plate 10. In the direction close to the center x of the cover plate 10, the distance between the first score groove 121 and the second score groove 122 gradually decreases. An advantageous aspect of this design is that it allows the end of the first score groove 121 and the second score groove 122 that are closer together to experience more concentrated stress. When the internal pressure of the battery is high, the end that is closer together can rupture first. Under the continued effect of the internal pressure, the first score groove 121 and the second score groove 122 will crack in the direction toward the edge of the cover plate 10.

In an optional embodiment, the end of the first score groove 121 close to the center x of the cover plate 10 can be connected to the end of the second score groove 122 close to the center x of the cover plate 10. When the internal pressure of the battery is high, the connection point between the first score groove 121 and the second score groove 122 will rupture first, forming an opening through which the internal pressure of the battery can be released. If the internal pressure becomes excessive, the opening will expand along the first score groove 121 and the second score groove 122 toward the edge of the cover plate 10. Meanwhile, the portion of the cover plate 10 between the first score groove 121 and the second score groove 122 will bend and deform in a direction away from the battery. Ultimately, this will create a through hole between the first score groove 121 and the second score groove 122 that is communicated with the internal chamber of the battery.

In another optional embodiment, to reduce stress concentration and improve the internal pressure resistance of the cover plate 10, the score groove 12 may further include a third score groove 123. One end of the third score groove 123 is connected to the end of the first score groove 121 that is close to the center x of the cover body 13, and the other end of the third score groove 123 is connected to the end of the second score groove 122 that is close to the center x of the cover body 13. This design allows both ends of the third score groove 123 to become regions of concentrated stress. When the internal pressure of the battery exceeds the allowable value of the cover plate 10, both ends of the third score groove 123 will rupture first. Under the continued effect of the internal pressure, at one end of the third score groove 123, a crack will propagate along the second score groove 122 and the third score groove 123. Simultaneously, at the other end of the third score groove 123, another crack will propagate along the first score groove 121 and the third score groove 123. This will eventually form a through hole between the first score groove 121 and the second score groove 122, which can be communicated with the internal chamber of the battery to release the internal pressure.

In yet optional embodiment, the score groove 12 may further include a fourth score groove 124. The fourth score groove 124 is connected to the end of the first score groove 121 that is away from the center x of the cover plate 10, and it extends in the direction toward the second score groove 122. This configuration allows the portion of the cover plate 10 between the first score groove 121 and the second score groove 122 to bend outward from the chamber of the battery, forming a larger opening.

In some embodiments, the score groove 12 may further include a fifth score groove 125. The fifth score groove 125 is connected to the end of the second score groove 122 that is away from the third score groove 123, and it extends in the direction toward the first score groove 121. This design enables the portion of the cover plate 10 between the first score groove 121 and the second score groove 122 to bend outward from the chamber of the battery, creating a larger opening.

For example, the score groove 12 may include a fourth score groove 124 and not include a fifth score groove 125. The fourth score groove 124 is connected to the end of the first score groove 121 that is away from the center x of the cover plate 10, and it extends in the direction toward the second score groove 122.

In another embodiment, the score groove 12 may include a fifth score groove 125 and not include a fourth score groove 124. The fifth score groove 125 is connected to the end of the second score groove 122 that is away from the third score groove 123, and it extends in the direction toward the first score groove 121.

In yet another embodiment, the score groove 12 may include both a fourth score groove 124 and a fifth score groove 125. The fourth score groove 124 is connected to the end of the first score groove 121 that is away from the center x of the cover plate 10, and it extends in the direction toward the second score groove 122. The fifth score groove 125 is connected to the end of the second score groove 122 that is away from the third score groove 123, and it extends in the direction toward the first score groove 121.

An advantageous aspect of the above design is that it allows the portion of the cover plate 10 between the first score groove 121 and the second score groove 122 to more easily bend and deform in a direction away from the battery. This results in the formation of a larger through hole between the first score groove 121 and the second score groove 122, which is communicated with the battery chamber and can release the internal pressure of the battery.

In some embodiments, the third score groove 123 extends along the circumferential direction z of the cover plate 10. This helps to better distribute stress, increase the strength of the cover plate 10, and ensure that the score groove 12 of the cover plate 10 can be torn within the desired range of the internal pressure of the battery, preventing premature tearing that could lead to functional failure of the cover plate 10.

In some embodiments, the fourth score groove 124 extends along the circumferential direction z of the cover plate 10, similarly helping to better distribute stress, increase the strength of the cover plate 10, and ensure that the score groove 12 of the cover plate 10 can be torn within the desired range of the internal pressure of the battery, preventing premature tearing that could lead to functional failure of the cover plate 10.

In some embodiments, the fifth score groove 125 extends along the circumferential direction z of the cover plate 10, similarly helping to better distribute stress, increase the strength of the cover plate 10, and ensure that the score groove 12 of the cover plate 10 can be torn within the desired range of the internal pressure of the battery, preventing premature tearing that could lead to functional failure of the cover plate 10.

Exemplarily, any one of the third score groove 123, the fourth score groove 124, and the fifth score groove 125 can be configured to extend along the circumferential direction z of the cover plate 10. In another embodiment, the third score groove 123 and the fourth score groove 124 both extend along the circumferential direction z of the cover plate 10. In yet another embodiment, the third score groove 123, the fourth score groove 124, and the fifth score groove 125 all extend along the circumferential direction z of the cover plate 10. Specific implementations can be designed or adjusted according to actual needs or working conditions.

In some embodiments of the present application, by configuring one or more of the third score groove 123, the fourth score groove 124, and the fifth score groove 125 to extend along the circumferential direction z of the cover plate 10, stress distribution is improved, thereby enhancing the strength of the cover plate 10. This ensures that the score groove 12 of the cover plate 10 can be torn within the desired range of the internal pressure of the battery, preventing functional failure of the cover plate 10 due to premature tearing.

Please continue to refer to FIG. 1. In some embodiments, the cover plate 10 may further be provided with an annular protrusion 14. The annular protrusion 14 is located at the center x of the cover plate 10. One end of each rib 11 close to the center of the cover body 13 is connected to the annular protrusion 14. An advantageous aspect of this design, achieved by placing the annular protrusion 14 at the center x of the cover plate 10 and connecting it to each rib 11, is that it can make the structural strength along the circumferential direction z of the cover plate 10 more uniform. This, in turn, helps to reduce stress concentration along the circumferential direction z of the cover plate 10.

Please refer to FIG. 2 and FIG. 4. In some embodiments of the present application, the cover plate 10 includes two sides that diverge from each other in the thickness direction. The rib 11 and the annular protrusion 14 can be integrally designed. For example, the rib 11 and the annular protrusion 14 can be formed by stamping at least part of the cover plate 10 from one side to the other side of the cover plate 10. In another embodiment, the rib 11 and the annular protrusion 14 can also be obtained through a deep drawing process. This forming method is simple and reliable, allowing for an increase in structural strength without the need for additional material. Of course, the rib 11 and the annular protrusion 14 can also be designed as separate components.

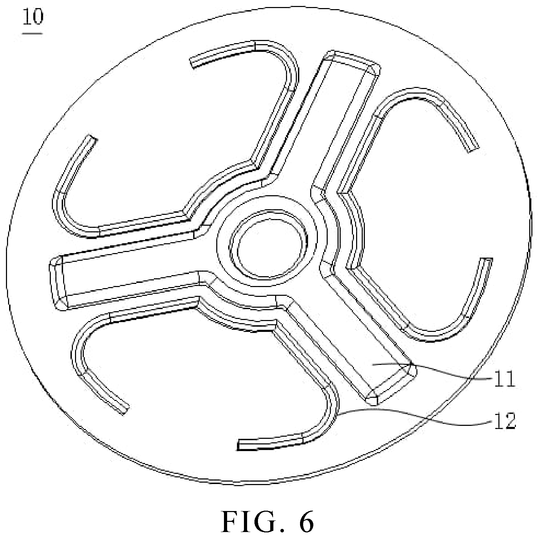

Please refer to FIG. 5 and FIG. 6, where FIG. 6 is a schematic structural diagram of the cover plate according to some embodiments of the present application. During the implementation of the embodiments of the present application, the inventors discovered that if there are too few ribs 11, for example, if there is only one rib 11, the cover plate 10 does not have sufficient strength to withstand the gravitational compression of the jelly roll of the battery. Conversely, if there are too many ribs 11, the planar space on the surface of the cover plate 10 becomes overly occupied by the ribs 11, resulting in insufficient strength for each rib 11 and inadequate planar space for designing the score grooves 12.

Additionally, during the implementation of the embodiments of the present application, the inventors found that if the groove depth of the score groove 12 is too shallow, the cover plate 10 is not likely to rupture and relieve pressure within the preset internal pressure range of the battery. On the other hand, if the groove depth of the score groove 12 is too deep, the cover plate 10 may rupture prematurely before reaching the preset internal pressure of the battery.

After multiple calculations and repeated experiments, the inventors determined that setting the number of ribs 11 to be between 2 and 10 allows the cover plate 10 to achieve optimal structural strength. For example, the number of ribs 11 can be any integer value from 3, 4, 5, 6, 7, 8, or 9, as long as it falls within this range.

Similarly, after extensive calculations and testing, the inventors found that when the ratio of the groove depth of the score groove 12 to the thickness of the cover plate 10 ranges from 50% to 97%, the cover plate 10 maintains good structural strength. For example, the ratio of the groove depth of the score groove 12 to the thickness of the cover plate 10 can be any value such as 55%, 60%, 65%, 70%, 75%, 80%, 85%, or 90%, provided it is an integer value within this range.

In practical implementation, designers can flexibly choose the number of ribs 11 and/or the ratio of the groove depth of the score groove 12 to the thickness of the cover plate 10 based on factors such as the internal pressure of the battery and the operating conditions of the battery.

It can be understood that the plurality of ribs 11 can be designed to be distributed at equal angular distances along the circumferential direction of the cover plate 10. However, they can also be distributed at unequal angular distances, with specific designs adjusted according to actual conditions.

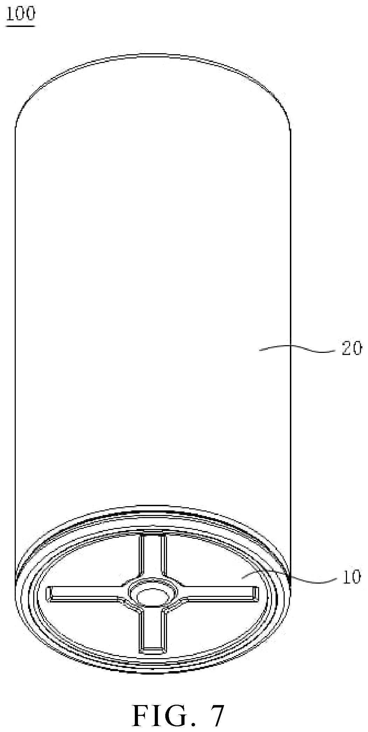

Please refer to FIG. 7, which is a schematic structural diagram of a battery according to some embodiments of the present application. Some embodiments of the present application provide a battery 100. This battery 100 may have a cylindrical shape, such as a cylindrical battery or a prismatic battery, but it can also be any other suitable cylindrical shape. The battery 100 includes a housing 20, a jelly roll (not shown), and the cover plate 10 provided in the above embodiments. The housing 20 is provided with a receiving chamber 21, the jelly roll 30 is disposed in the receiving chamber 21, and the cover plate 10 covers the housing 20 to seal the receiving chamber 21.

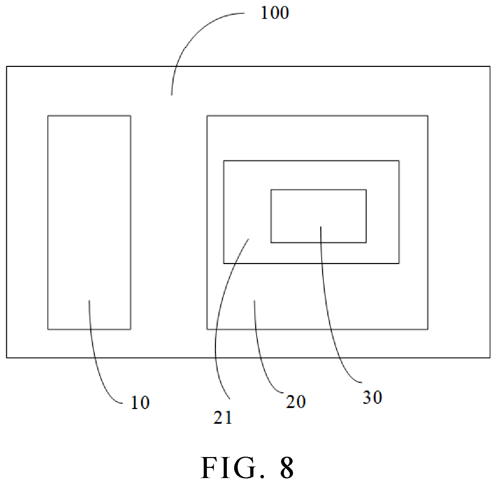

Referring to FIG. 8, in some embodiments, the cover plate 10, the ribs 11, and the score grooves 12 can be provided on the same side of the cover plate 10. When assembling the cover plate 10 onto the housing 20, the side of the cover plate 10 with the score grooves 12 faces the jelly roll 30 and covers the housing 20 to seal the receiving chamber 21. This design allows at least part of the internal pressure of the battery 100 to concentrate within the score grooves 12. As the internal pressure of the battery 100 increases, it can cause the cover plate 10 to crack along the score groove 12, thereby providing pressure relief protection.

In summary, the beneficial effects of the cover plate and battery provided in the embodiments of the present application are as follows: On one hand, by setting the score grooves in the regions of the cover plate between adjacent ribs, the cover plate can tear along the score grooves without reducing the strength of the ribs, facilitating the stable release of internal pressure. On the other hand, by positioning one end of the first score groove and one end of the second score groove close to each other, while the other ends are apart, the end that is closer together can rupture first when the internal pressure of the battery is high. Under the continuous effect of the internal pressure, the first and second score grooves will crack towards the edge of the cover plate. Finally, by configuring one or more of the third, fourth, and fifth score grooves to extend along the circumferential direction of the cover plate, stress can be better distributed, thereby enhancing the strength of the cover plate. This ensures that the score grooves of the cover plate can be torn within the desired range of the internal pressure of the battery, preventing functional failure of the cover plate due to premature tearing.

## Claims

1. A cover plate (10) for a battery (100), comprising:
a plurality of ribs (11) provided on the cover plate (10), wherein the plurality of ribs (11) each extend outward from a center (x) of the cover plate along a radial direction (y) of the cover plate, and the plurality of ribs (11) are distributed along a circumferential direction (z) of the cover plate; and
a plurality of score grooves (12) provided on the cover plate (10), wherein each of the plurality of score grooves (12) is provided between two adjacent ones of the plurality of ribs (11), and the plurality of score grooves (12) are configured to rupture under an internal pressure of the battery (100).

2. The cover plate (10) according to claim 1, wherein at least one of the plurality of score grooves (12) comprises a first score groove (121) and a second score groove (122), and the first score groove (121) and the second score groove (122) both extend along a direction from the center of the cover plate (10) to an edge of the cover plate (10); along the direction from the center (x) of the cover plate to the edge of the cover plate (10), a distance between the first score groove (121) and the second score groove (122) gradually increases.

3. The cover plate (10) according to claim 2, wherein an end of the first score groove (121) close to the center of the cover plate (10) is connected to an end of the second score groove (122) close to the center of the cover plate (10).

4. The cover plate (10) according to claim 2, wherein the at least one of the plurality of score grooves (12) further comprises a third score groove (123), an end of the third score groove (123) is connected to the end of the first score groove (121) close to the center (x) of the cover plate, and another end of the third score groove (123) is connected to the end of the second score groove (122) close to the center (x) of the cover plate.

5. The cover plate (10) according to claim 3 or 4, wherein the at least one of the plurality of score grooves (12) further comprises a fourth score groove (124), the fourth score groove (124) is connected to an end of the first score groove (121) away from the center (x) of the cover plate, and the fourth score groove (124) extends along a direction close to the second score groove (122); and/or
the at least one of the plurality of score grooves (12) further comprises a fifth score groove (125), the fifth score groove (125) is connected to an end of the second score groove (122) away from the third score groove (123), and the fifth score groove (125) extends along a direction close to the first score groove (121).

6. The cover plate (10) according to claim 5, wherein the third score groove (123) extends along the circumferential direction (z) of the cover plate; and/or
the fourth score groove (124) extends along the circumferential direction (z) of the cover plate; and/or
the fifth score groove (125) extends along the circumferential direction (z) of the cover plate.

7. The cover plate (10) according to claim 5, further provided with an annular protrusion (14), wherein the annular protrusion (14) is located at the center of the cover plate (10), and an end of each of the plurality of ribs (11) close to the center (x) of the cover plate is connected to the annular protrusion (14).

8. The cover plate (10) according to any one of claims 1 to 4, wherein the number of the plurality of ribs (11) is from 2 to 10.

9. The cover plate (10) according to any one of claims 1 to 4, wherein a ratio of a groove depth of one of the plurality of score grooves (12) to a thickness of the cover plate (10) ranges from 50% to 97%.

10. A battery (100), comprising:
a housing (20) provided with a receiving chamber (21);
a jelly roll (30) disposed in the receiving chamber (21); and
the cover plate (10) as claimed in any one of claims 1 to 9, wherein the cover plate (10) covers the housing (20) to seal the receiving chamber (21).
